# FASCICULE DE BREVET EUROPEEN

(11) **EP 1 019 287 B1**
(45) Date de publication et mention de la délivrance du brevet: **19.03.2003**
(21) Numéro de dépôt: 97944926.1
(22) Date de dépôt: 06.10.1997
(51) Int. Cl.: B64D 35/00

(54) **VEHICULE AERIEN**
LUFTFAHRZEUG
AIRCRAFT

(30) Priorité: 01.10.1997 FR 9712190
(43) Date de publication de la demande: 19.07.2000
(73) Titulaire: HARDOIN, Pierre, 37700 Saint-Pierre-des-Corps (FR)
(72) Inventeur: HARDOIN, Pierre, 37700 Saint-Pierre-des-Corps (FR)
(86) Numéro de dépôt international: FR9701765
(87) Numéro de publication internationale: WO99016667

(56) Documents cités:
- FR-A- 1 550 060
- GB-A- 1 116 949
- US-A- 3 614 029
- US-A- 4 856 732

## Description

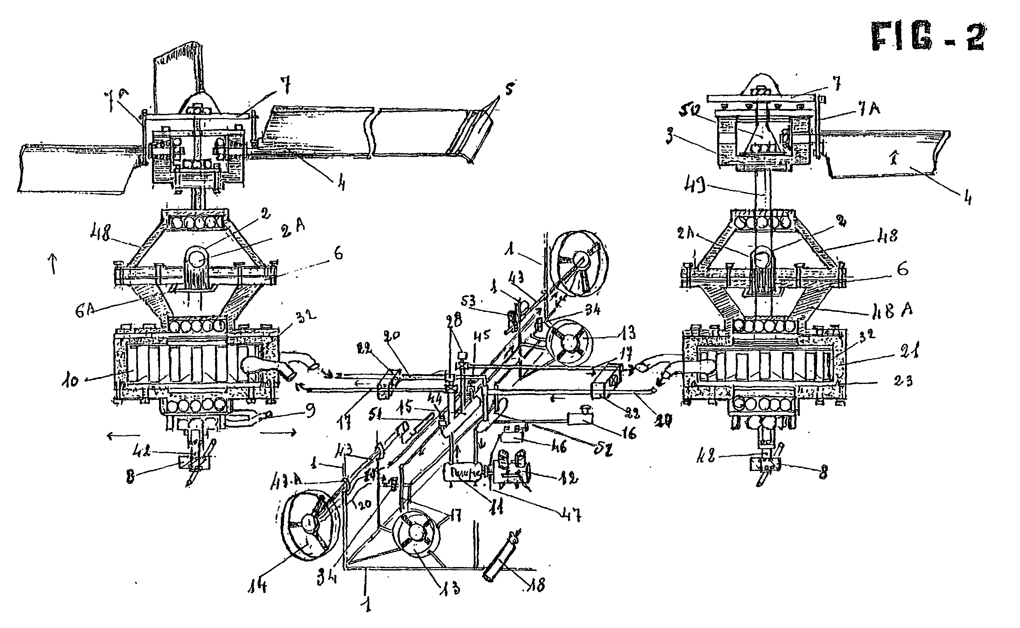

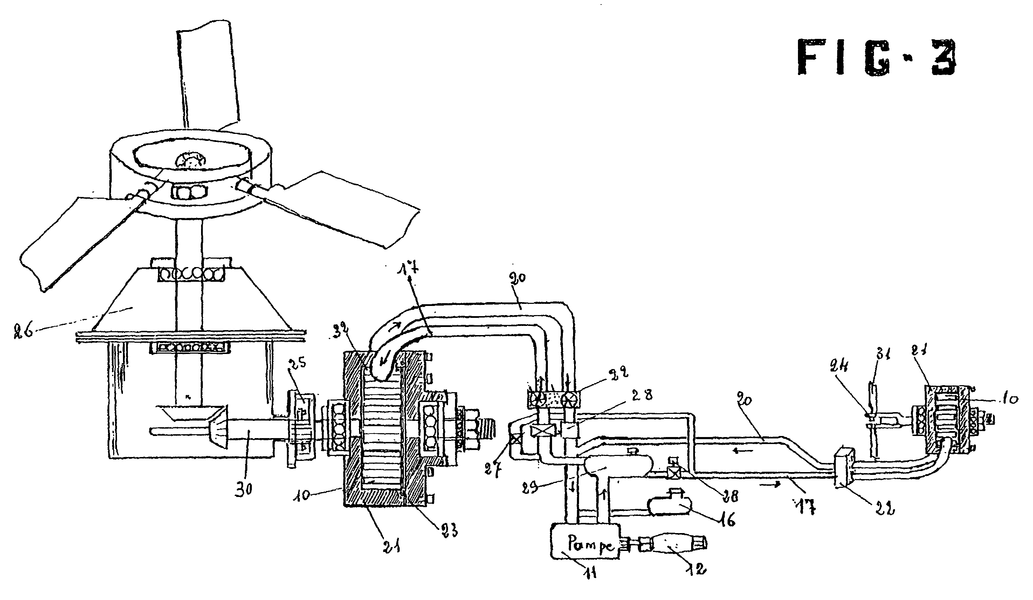

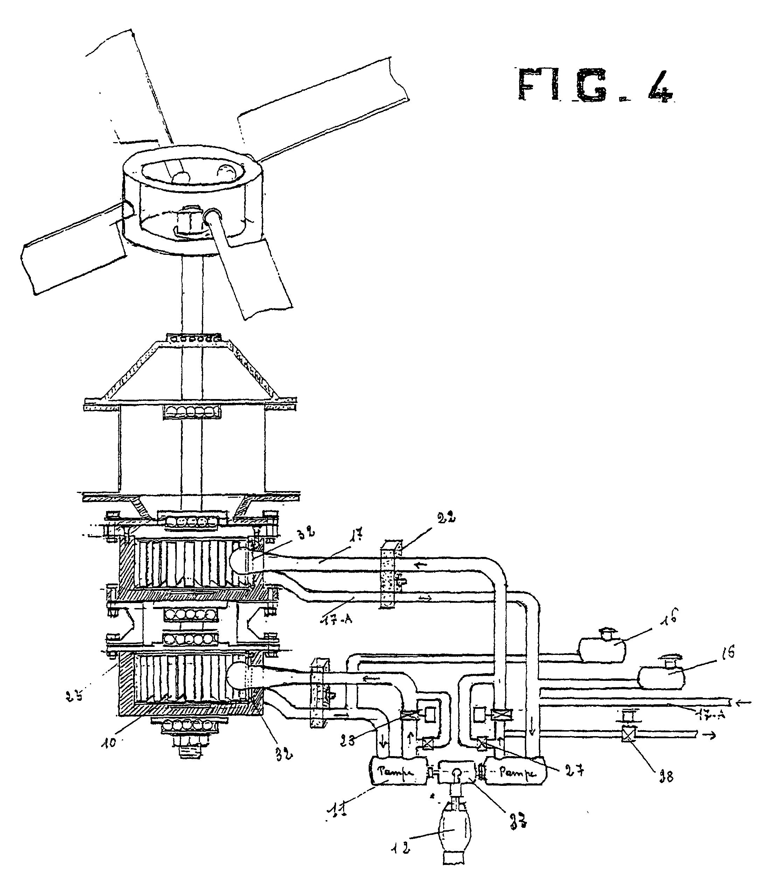

Un exemple de la présente invention inédit concerne un prototype d'appareil d'un type nouveau de propulsion à entraînement par turbine hydraulique pour l'ensemble qui concerne la sustentation et la propulsion de cet appareil,prend pour déterminer l'appareil le nom de "Hydropal terrestre aérien HP02", le document GBA 1116949 montre un appareil avec entrainement avec une structure constituée au centre d'un habitacle constitué de tubes en dural ou autres,de forme rectangulaire, l'appareil ayant deux rotors de sustentations munis à leurs extrémités d'un arbre, le but de la présente invention est de proposer un appareil allégé, d'une grande maniabilité avec un entraînement hydraulique des différents éléments de sustentation et de propulsion;
le chassis (1) est fabriqué en tube dural où matériaux composite,assemblé par entretoises soudées avec au centre un habitacle rectangulaire pour le logement de trois personnes,le pilote étant au centre, deux poutres triangulaire fixées au centre sur la partie la plus large au chassis (1); aux extrémités est fixé le support des rotors articulés (2), sous la partie basse du chassis (1) sont placés quatre roues de roulage au sol, deux fixes,deux articulées;
possédant pour sa sustentation deux rotors (3) principaux de 2.70 mts de diamètre avec une pluralité de quatre pales (4) de forme triangulaire à portance plus rapprochée vers le point d'attache,placé sur le moyeu rotor (3),ces pales (4) sustentatrices à ouverture collectives ont l'ouverture effectuée par l'action de l'arbre (42) et du mouvement (8) relié au manche pas collectif,placé et fixé au plancher auprès du pilote,sur l'arbre mobile (42) coulissant passe par le centre de l'arbre principal (49) entraînant le rotor (3) principal support de pales (4); l'arbre (42) reçoit à son sommet le plateau (7) support de biellettes raccordées au point de fixation se trouvant sur les pales (4) qui sont à ouvertures collectives,sous l'action du plateau (7); chcunes des pales principales sustentatrices (4) possèdent un embout anti-vibratoire (5),placé à 0.08 cm de l'extrémité du bout de pale,l'ensemble des pales possèdent une pièce avec entrée d'air canalisée par tube,avec effet de sortie d'air réglé à une hauteur du filet d'air décalé de la partie supérieure d'écoulement d'air,cette différence étant que l'écoulement d'air supérieur de la pale (4) et le jet (5) de sortie d'air inférieur fait une partie neutre qui empêche celle-ci de vibrer;le saumon de bout de pale (4) à une retombée,courbé à 50°, ceux-ci montés permettant de concentrer et d'arrêter la fuite de l'air vers l'extérieur de cercle des pales (4);
l'entraînement des deux rotors (3) principaux et autres éléments tournants,hélices (14),aubes (13) est effectué par la pression d'une pompe (11) très haute pression spéciale,qui est entrainée par un moteur (12) fonctionnant au carburant ou par petit réacteur;l'entraînement de la pompe se fait par l'intermédiaire d'un embrayage entre la pompe et le moteur;cette pompe très haute pression (11) qui est en recyclage incorporé,envoi sa pression au collecteur (15), ce collecteur (15) possède divers départs,un qui part avec sa vanne (28) d'arrêt à ouverture pré-réglé à débit progressif, qui évite une arrivée brutale sur la turbine,cette vanne (28) est commandée par contact électrique émis par le pilote,qui celui-ci possède toutes les commandes et contrôles sur un tableau placé à sa hauteur,fixé sur le chassis (1) et devant lui, l'entraînement des rotors principaux (3) se fait par la pression qui est en attente dans le collecteur (15),le fluide par les tuyauteries (17) sur les turbines (10) qui elles se mettent à tourner dans le sens prévu à cet effet,un volet (32) de non retour est placé à l'intérieur du corps (21) de la turbine (10); la turbine commençant à tourner, le retour d'évacuation (20) se fait en aspiration direct ce qui fait qu'aucun freinage ne se fait sur le cycle en circuit,les vannes de départ (28)(44)(45), chacune à ouverture très lente ne peut détérioré la turbine (10) qui elle a son débit calculé pour son nombre de tours prévus sur chaque turbines (10) placées sur les éléments tournants;le raccordement des turbines (10) aux tuyauteries (17)(20) est fixé à des flexibles souples, des ventilateurs de refroidissement sont placés sur les tuyauteries (17)(20),le basculement des têtes rotors (3) principales avec ses pales (4),se fait du manche pas cyclique se trouvant fixé au plancher et placé auprès du pilote,les rotors (3) à pales sustentatrices sont raccordées entre eux pour avoir le même angle de degrés de basculement d'avant en arrière du point 0 + 6° et 0 - 6°, les deux rotors (3) sont fixés sur leur axe (2) qui est fixé sur la pièce (6A), qui cet axe (2) se trouve articulé sous la poussée du vérin (9);
les deux hélices rétractables carenées (14) sont maintenant à entraînement par turbines hydraulique (10), qui ces turbines auront leur diamètre réduit et approprié à son diamètre d'hélices (14) extérieur de 0.60 mts et possède des hélices tripales (14), les corps des turbines (10) dans le corps (21) est fixé sur les montants supports, qui supports sont fixés en bout de l'arbre (43) à 90°,la turbine (10) se trouve fixée sur l'arbre support (43) des hélices (14);cet ensemble monté et fixé en bout d'arbre coulisse dans des guides (43A), l'arbre (43) coulissant sous l'action d'un vérin hydraulique (51) placé sur chaque hélice (14) qui sont placées de chaque côté; manoeuvre exercée suivant les besoins pris par le pilote;l'arbre support (43) où sont fixées les hélices (14) tournent dans une position désirée pour l'évolution, sous l'action du petit moteur réducteur (52) placé sur l'arbre (43) et fixé au support chassis (1);ce qui permet cette manoeuvre, c'est que l'entraînement étant effectué par une turbine hydraulique (10) qui est placé-sur l'arbre d'entraînement central,qui sur cet arbre est fi xé l'hélice tripales (14),qui elles sont carenées, la rotation de sens permet l'avancement ou le recul de l'appareil par les hélices (14);cette manoeuvre est possible,vu que la force de rotation se trouve sur l'arbre hélice de propulsion; je précise que ce nouveau système hydraulique permet à ces hélices (14) une fois sorties de se mettre en position de montée tournante variant de 0° à 180°; en plus celles-ci sont libre de positionnement et suivant l'évolution à effectuer,les alimentations (17) et retours (20) sont raccordées par flexibles souples,des canalisations fixes à la turbine (21);les flexibles coulissent le long de l'arbre (43) maintenu par un fil ressort, je précise que ces hélices carenées (14) contribues également à l'avancement de l'appareil en complément des doubles rotors (3) avec pales (4) sustentatrices,un clapet double effet (34) de non retour est placé sur le retour des hélices rétractables (14) pour éviter le désamorçage du circuit en cas de non utilité; sont également placés sous les sièges passagers et placés de chaque côté, un ensemble d'aubes carenées (13) sustentatrices,qui sont à pas variables et qui sont branchées pour l'ouverture du pas sur le palonnier placé au plancher se trouvant dans la cabine de pilotage;ces aubes carenées (13) reçoivent pour leur entraînement (10)(21) qui elle est fixée sur l'arbre d'entraînement, recevant le moyeu support des aubes (13), qui ce moyeu support reçoit le mécanisme d'ouverture de pas qui est raccordé au palonnier;la fixation des turbines (13) est faîte par le bloc (21) support turbine,qui est fixé par soudures et tubes au chassis (1) tubulaire,ce procédé d'aubes (13) favorise la stabilité,en plus permet dès le saut du commandos de rétablir la stabilité en quelques secondes de l'appareil par l'action du palonnier sur les aubes (13), manoeuvre soit à droite ou gauche, les ailerons (18) placés extérieurement derrière les places assises font le complément du pilotage pour le vol horizontal;cet appareil léger de part sa conception, du fait que ne possédant aucunes transmissions mécanique d'entraînements lourdes et encombrantes ainsi que réducteurs;tous ces entraînements étant remplacés par le principe de la turbine hydraulique d'entraînement,représentant la force moteur pour l'entraînement des turbines, procédés plus souples ne faisant aucunes vibrations sur les points tournants et donne satisfaction, la puissance hydraulique en réserve du collecteur (15) avec sa pompe (11) très haute pression ne prend très peu de place; tous les matériaux employés auparavant et actuellement par rapport aux matériaux et système employés,la densité actuelle étant de 50 à 80 kilogrammes, sera pour 10 kilogrammes pour l'appareil futur,le procédé d'après la fig.2, à regarder est très simple de fonctionnement,cet appareil pourra être transporter sur les lieux d'opération par camion plateau ou en vol, en cas d'arrêt (très rare) du moteur principal (12) il est prévu un petit compresseur d'air (46) qui sera toujours en pression avec la réserve d'air aura son système de débrayage automatique, dès pressions atteintes; (cette installation n'est pas obligatoire mais nécessaire);le procédé est le suivant,le moteur (12) s'étant débrayé suite à une panne et par une simple manoeuvre enclenchée le contact d'ouverture de la vanne d'air pour alimenter la turbine d'air se trouvant sur l'arbre de la pompe (11), celle-ci étant en mouvement centrifuge, la force de la turbine d'air continue à faire tourner les rotors (3) sustentateurs et permet à l'appareil de se poser sans dommages;
le principe de l'entraînement hydraulique,que je décrit et revendique l'intégralité,peut être monté sur les voilures tournantes d'un certain type actuel et futur, fig.3, fig.4 avec fiche technique détaillée;cette possibilité de ce procédé est possible; cette technique de nouvelle conception d'entraînement hydraulique est à prendre en considération;actuellement ce montage donnant toutes satisfactions aux essais;ce procédé moins coûteux verra l'avenir avec cette propulsion hydraulique,pour certains types d'appareils actuels et futur;ce procédé hydraulique pourra être installé sur des véhicules roulants et ferroviaire;cette conception permettra des économies de consommation moins polluant et peu bruyant;également ce procédé pourra être monté sur des véhicules électrique futur; l'entraînement hydraulique pour ces véhicules pourra être fait par petit moteur classique pour une même vitesse;le principe de la turbine hydraulique d'entraînement peut s'adapter sur l'axe d'entraînement pour la propulsion d'un bâteau,d'un train,d'un véhicule roulant terrestre ou autres véhicules de ce type

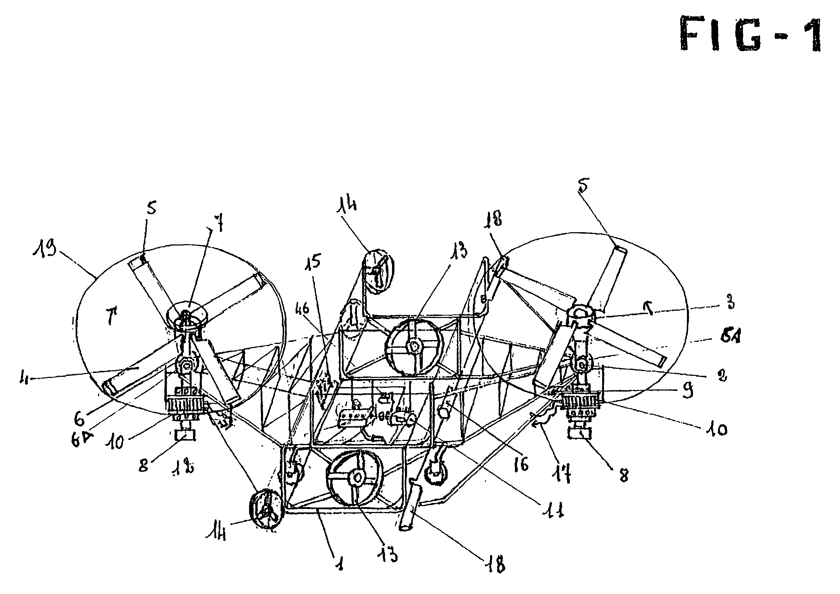

### Descriptif Fig 1 - Fig. 2

- 1 Chassis Tubulaire
- 2 Charnieres pivotantes à axe central commandant la tête du rotor
- 3 Moyeu support de pales
- 4 (4) pales à portance plus vers le centre
- 5 Systéme anti-vibratoire de bout de pales
- 6 Plateau support tête articulée
- 7 Plateau coulissant avec biellettes pour ouverture du pas
- 8 Systéme d'ouverture de l'ensemble du pas collectif raccordé au levier intérieur
- 9 Vérin du pas cyclique du rotor
- 10 Turbine d'entraînement hydraulique des rotors
- 11 Pompe Trés Haute Pression, fournissant la puissance au rotor à recyclage incorporé
- 12 Moteur d'entrainement de la pompe Trés Haute Pression
- 13 Aubes carénées à pas réglables à entrainements hydraulique pour stabilité de l'appareil, branché sur le palonnier
- 14 Hélices retractables tournant de 0° à 180°
- 15 Collecteur alimentant les diverses turbines avec vannes préréglées en débit progressif
- 16 Réservoir d'expansion avec bouchon remplissage
- 17 Tuyauteries rigides,flexibles d'alimentation et retour se trouvant sur chaque départ et retour des 6 tubines
- 18 Ailerons de stabilités et directionnels de l'appareil
- 19 Cercles de protection
- 20 Tuyau retour
- 21 Corps de la turbine Trés Haute Pression
- 22 Radiateur refroidissement
- 23 Joint étanche corps turbine

### Descriptif Fig. 4

### Descriptif du montage sur appareil

- 32 Volet anti-retour incorporé dans le corps de pompe fixe de la turbine
- 16 Réservoir liquide
- 17 Alimentation pression de la pompe Trés Haute Pression
- 17A Retour du rotor arriére anti-couple Fig. 3
- 23 Joint étanche du couvercle
- 12 Moteur fonctionnement au carburant ou petit réacteur
- 33 Distributeur d'entrainament des 2 Pompes

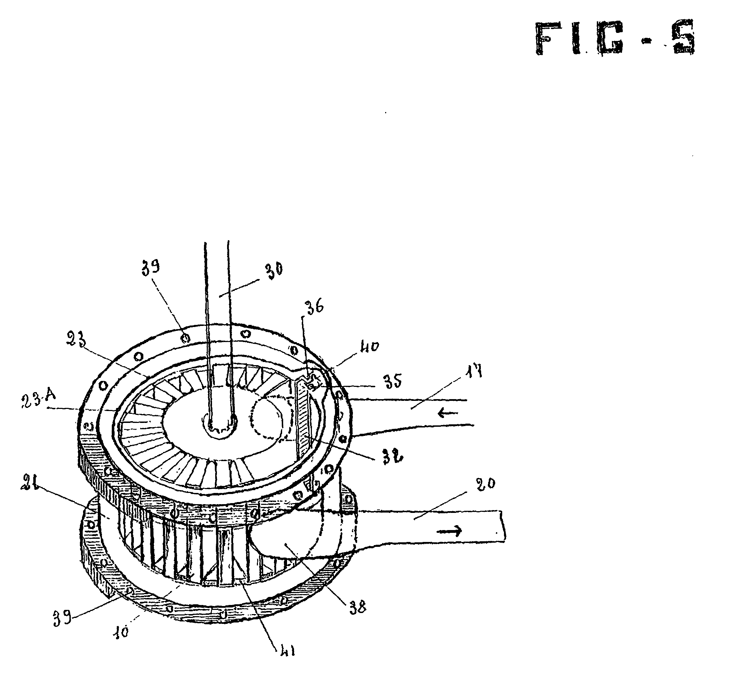

### DESCRIPTIF FIG. 5

### Description du modèle de turbine d'entraînement

- 32 volet anti-retour se logeant dans l'épaisseur de la parole y compris ressort incorporé dans l'axe de pivotement
- 34 Clapet non retour à ouverture poussée retour
- 35 Axe du volet
- 36 Butoir du volet
- 37 Corps de la turbine
- 38 Sortie d'évacuation à large dégagement
- 39 Trous de fixation du couvercle au corps de la turbine
- 40 Ressort de rappel de non retour du volet
- 41 Flasques supérieur et inférieur bloquant toute la pression sur les ailettes
- 42 Arbre d'ouverture du pas collectif
- 43 Arbre coulissant support où sont fixés les hélices (14)
- 44 Vanne à ouverture progressive à contact électrique pour les aubes (13)
- 45 Vanne alimentation hélices (14)
- 46 Compresseur

### Descriptif fig 2

- 43 Arbre central hélice 14
- 44 Vanne pré-réglée
- 45 Vanne départ
- 46 Compresseur d'air
- 47 Turbine à air
- 48 Supports conique de la tête rotor
- 49 Arbre principal traversant l'ensemble
- 50 Support guide ouverture pas collectif
- 51 Vérin de sortie hélices (14)
- 52 Vase retour du fluide
- 53 Moteur réducteur faisant tourner les hélices (14) sur leurs axes (43)

### DESCRIPTIF FIG. 3

### Procédé installé sur hélicoptère en remplacement du système boîte cardans

- 22 Radiateur refroidissement huile
- 24 Ensemble rotor arrière anti-couple
- 25 Embrayage automatique
- 26 Ensemble rotor principal actuel
- 27 Vanne by-pass manuelle
- 28 Vanne d'ouverture programmée à passage fluide progressif
- 29 Réservoir principal de distribution de fluide partant du départ de la pompe
- 30 Arbre de transmission
- 31 Pales rotor arrière

## Revendications

1. Appareil énoncé dit "Hydropal terrestre et aérien HP02" avec entrainement hydraulique mu en deux forces séparées composées, d'un moteur et d'une pompe très haute pression,la pompe (11) étant la force disponible au fonctionnement des diverses sustentations et propulsions;appareil avec sa structure constituée au centre d'un habitacle constitué de tubes en dural ou autres,de forme rectangulaire recevant trois personnes dont le pilote au centre se trouvant au-dessus de la mécanique, moteur, qui sont surbaissés, les deux autres passagers étant de chaque côté à sortie rapide,au centre sur l'axe central du chassis sont fixés,soudés des poutres triangulaires, une devant,une derrière,celles-ci sont munies de croisillons de renfort; aux extrémités des poutres triangulaires,sont fixés les supports (2A) de chaque rotor qui reçoivent l'ensemble rotors,turbines hydrauliques et arbre vertical (49),une tête rotor est placée sur chaque extrémité;l'appareil ayant deux rotors de sustentations munis à leurs extrémités d'un arbre,le rotor (3) étant muni d'une pluralité de quatre pales (4) à pas variable, ces pales (4) sont à portance triangulaire, plus stable, plus large vers le point d'attache pivotant,avec à l'extrémité des pales (4) un embout saumon de bout de pales recourbé vers le bas à 50° qui évite le glissement de l'air vers l'extérieur; sont logés dans le bout des pales sustentatrices (4) quatre passages d'air réglés à éjection à plat (5) faisant de la partie supérieure de sustentation de la pale (4) et du jet (5) un espace neutre qui évite cette vibration pour l'ensemble des pales rotors;

2. Appareil selon la revendication 1 **caractérisé à ce qu'** un système d'entraînement hydraulique (21)(10) est prévu; cet entraînement étant constitué d'un corps (21) avec volet de non retour (32) incorporé avec la turbine (10), celle-ci entraînant l'arbre (49) constitue le moteur d'entraînement qui se trouve suspendu sous le rotor (3) support de pales (4);cette turbine (21)(10) constituant la force moteur de l'appareil;toutes transmissions hydraulique actuellement en service n'existe plus,que les éléments tournants sont entrainés par la force hydraulique (10), que ce procédé devient plus maniable,par ce procédé évolutif;

3. Appareil selon la revendication 2 **caractérisé en ce que** la turbine (10) dans son corps fixe (21) est fixé au cônes (48) entraîne l'arbre (49) surmonté du rotor (3) à pales sustentatrices (4);l'arbre d'entraînement (49) traverse les cônes (48);entre les deux se trouve la pièce (6) où est fixé la pièce mâle (2A) qui cet axe est emboité sur la pièce (2) placé sur le chassis,bout de poutre (1);cet emboîtement fait articulé l'ensemble de la sustentation tête rotor (3) de l'appareil,cet ensemble bascule sous l'action du vérin (9) relié au manche pas cyclique, se trouvant à côté du pilote;

4. Appareil selon la revendication 3 **caractérise que** l'ouverture du pas collectif se fait par l'arbre (42) traversant l'arbre (49) d'entraînement central (49) sur sa longueur pour déboucher au-dessus du moyeu rotor (3) une cône (50) guide cet arbre (42);la sortie de l'arbre (42) à son extrémité reçoit le plateau support (7) avec l'ensemble des biellettes (7A) raccordées aux pales (4);sous l'action du mécanisme (8) raccordé au manche pas collectif,qui se trouve auprès du pilote,fait l'ouverture du pas collectif de l'ensemble des deux rotors (3) avec pales anti-vibrantes (5);les têtes rotors avant et arrière celui-ci étant surelévé par rapport au rotor avant;ceux-ci étant raccordés ensemble pour avoir le même angle d'inclinaison;

5. Appareil selon les revendications 1 et 3 **caractérisé que** l'ensemble,poussée hydraulique et motorisation se trouvent au centre surbaissé de l'habitacle;le pilote se trouve au-dessus qui est isolé et insonorisé, assis devant le tableau de contrôle et commandes électrique; les deux sièges passagers se trouvent de chaque côté du pilote et sont à dégagement rapide;la motorisation est effectuée par un moteur à explosion (12) où suivant l'appareil,un petit réacteur qui entraîne par l'intermédiaire d'un embrayage automatique une pompe très haute pression (11) à recyclage;cette pompe refoule sur un collecteur (15) qui a ses vannes de départs fermées,ce collecteur distributeur qui est toujours sous pression suite au raccordement du départ de la pompe (11) au collecteur (15); je précise que la force moteur (15) d'entraînement reste disponible,cela permet de s'avérer autour de l'appareil sans aucun danger qui n'est pas le cas d'un hélicoptère;pour le dégonflement de la pression dans les circuits, ouvrir la vanne (45) par contact électrique, les hélices (14) étant rentrées dans son emplacement dans l'appareil qui se trouve devant les passagers,mais isolé, l'habitacle étant étanche, donc toute sécurité

6. Appareil selon les revendications 3-4-5 **caractérisé que** pour le fonctionnement à partir du collecteur se trouvent les départs des vannes (28)(44)(45) qui sont à débit pré-réglés et progressif, à savoir,un départ (28) vers les deux rotors à pales sustentatrices (3) avev vis de réglages sur chaque départ qui régule les tours des têtes (3),un départ avec la vanne (45) à débit pré-réglé vers les deux hélices carenées rétractables (14) à débit jumellés pour les deux hélices (14) car celles-ci fonctionnent par deux; un départ avec vanne (44) à débit progressif et pré-réglé pour les aubes carenées stabilisatrices (13),tous ces départs sont à commande contact électrique,toutes les commandes sont placées sur le tableau de bord devant le pilote;tous les retours des circuits sont individuels,sont collectés sur un collecteur (52) central,qui lui est raccordé sur l'aspiration de la pompe (11), un vase d'expansion est placé derrière le siège pilote,un clapet (34) de non retour à double effet est placé sur retour (20) celui-ci,en cas de non fonctionnement volontaire;

7. Appareil selon les revendications 3-4-5-6 **caractérisé que** par les hélices carenées rétractables (14) qui étaient à entrainement mécanique est supprimé pour être remplacer pour un entraînement hydraulique (10) et son corps (21),qui la turbine d'entraînement est placé en bout d'arbre,fixant les hélices propulsives (14),ce procédé favorise maintenant que les hélices (14) ayant leur moteur hydraulique en bout d'arbre favorise l'évolution de cet ensemble rétractable (14);ce procédé permet aux hélices (14) une fois sortie de leurs emplacements intérieur de tourner de 0° à 180° sur son axe soutient (43), qui celui-ci est placé sur guide (43A), sous la poussée du vérin (51),un petit moteur réducteur fait tourner l'arbre (43) pour positionner les hélices (14) à la position d'évolution estimée par le pilote;

8. Appareil selon les revendications 6-7 **caractérisé,** pour lequel les hélices rétractables (14) sont à sorties collectivent ou séparées;les contacts se trouvant sur le manche à balai à hauteur du pilote,le manche à balai est fixé au plancher sur rotule, celui-ci reçoit la commande des volets (18) et peuvent être conjuguées avec les hélices (14),les hélices carenées (14) sont en complément,si nécessaire, dirigent l'appareil au sol, tous les ensembles des circuits sont refroidis par une ventilation électrique (22)

9. Appareil selon les revendications 4-5 **caractérisé à ce que** l'appareil possède deux aubes carenées (13) qui sont placées sous les sièges à plancher isolé,sur les sièges se trouvant des hommes à déposer;la sortie des hommes se trouvant à l'intérieur sont à sortie rapide,ces aubes (13) carenées ont une pluralité d'aubes fixées au moyeu support central et sont à pas variables,ces aubes mobiles sont raccordées du mécanisme de variation de pas au système sur le palonnier se trouvant au plancher devant le pilote, pour la rotation des aubes (13),celle-ci se fait par turbine (10) et corps de turbine (21) est fixé au chassis par tubes soudés, la turbine (10) est appropriée en diamètre suivant le diamètre des aubes sustentatrices n'excédant pas 0.60 mts, les alimentations (17)(20) sont effectuées par flexibles raccordés aux tuyaux fixes;

10. Appareil selon les revendications 6-8 **caractérisé que** le principe de la stabilité passe par les aubes carenées (13) qui sont à pas variables,qui en cas de déséquilibre de la stabilité, soit par le poids des hommes d'un côté ou de l'autre,que l'appareil à tendance à pencher suite à une poussée par le pied sur le palonnier, celui-ci pousse sur le côté à rectifier et l'appareil se rétabli horizontalement en ligne de vol;ce cas aura tendance à se faire lors du saut de l'homme pour toucher terre,mais en quelques secondes tout se stabilise;

11. Apppareil selon revendications 1-2-4 b l'ensemble de sa conception sera en construction légère,allégé par la suppression de l'ensemble de la mécanique boîte, cardans lourd et encombrant,par cette invention mis au point l'entraînement hydraulique est une évolution dans le domaine des voilures tournantes,cet appareil pourra servir aux commandos d'attagues, au génie, car transportable par camion sur les lieux d'opérations contribu à une énorme économie, celui-ci sera avec peu d'entretien,il sera d'un pilotage facile,la vitesse sera d'environ de 100 kms à l'heure;

12. Appareil selon les revendications précédentes, **caractérisé en ce que** le système d'entraînement hydraulique et procédés décrit que le moteur,pompe fonctionnant,les vannes des départs étant fermées et prêt à décoller dans les secondes qui suivent par la réserve (15) moteur en attente, donc sécurité pour les personnes autour, l'installation de ce système sur d'actuels modèles d'hélicoptères étant possible.

13. Appareil selon les revendications précédentes **caractérisé que** l'appareil possède son système de sécurité (peut être monté si nécessaire);en cas de panne du moteur d'entraînement, un système de secours est installé sur l'appareil (Hydropal aérien), le raccordement d'entraînement étant effectué par un embrayage automatique (47) qui a sur son arbre côté pompe hydraulique la turbine à air d'entraînement, cette turbine est reliée à la réserve d'air par canalisation avec le compresseur (46),qui en cas d'arrêt du moteur (12) le pilote enclenche la turbine à air qui elle fait tourner la pompe hydraulique et permet à l'appareil de se poser;

## Patentansprüche

1. Der hier aufgeführte sogenannte "Hydropal terrestre et aérien HP02" mit Hydraulikantrieb, der sich mit zwei getrennten zusammenarbeitenden Kräften dreht, mit einem Motor und mit einer Starkhochdruckpumpe; die Pumpe (11) ist die verfügbare Kraft für den Betrieb verschiedener Auftriebe und Antriebe. Es ist ein Apparat mit folgender Struktur: in der Mitte ein Cockpit bestehend mit Rohren aus Dural oder anderem; eine rechteckige Form für drei Personen; der Pilot befindet sich in der Mitte über der Mechanik, dem Motor, die zwei anderen Passagiere befinden sich tiefer und auf jeder Seite mit schnellem Ausgang; in der Mitte auf der Zentralachse des Chassis sind dreieckige Träger befestigt und geschweißt; einer hinten und einer vorne; diese sind mit Stützverspannungen ausgestattet; an den Enden der dreieckigen Träger sind die Halterungen (2A) von jedem Rotor befestigt, die die Gesamtheit der Rotoren, der Hydraulikturbine und die Vertikalwelle (49) erhält; ein Rotorkopf befindet sich auf jeder Spitze; der Apparat hat zwei Aufstiegsrotoren, die an ihren Enden eine Welle haben; der Rotor (3) besitzt eine Vielzahl an vier Luftschraubenblätter (4) mit variierbarem Steigungsgewinde; diese Luftschraubenblätter (4) haben eine dreieckige Reichweite, stabiler und breiter zu den beweglichen Anschlusspunkten hin, an den Enden der Luftschraubenblätter (4) gibt es ein um 50° nach unten gekrümmter Barrenansatz den Luftschraubenblätterspitzen, die den Luftstrom nach außen verhindern; vier auf flache Strahlverdichtung eingestellte Luftdurchgänge (5) befinden sich in den Spitzen der Auftriebsluftschraubenblätter (4) und ermöglichen aus dem oberen Teil des Luftschraubenblattantriebes (4) und der Drüse einen neutralen Raum zu schaffen, der ein Vibrieren der gesamten Einheit der Rotorluftschraubenblätter verhindert;

2. Apparat gemäss des Anspruchs 1 mit der Eigenschaft eines hydraulischen Antriebssystems (21) (10) ist vorsorgt. Dieser Antrieb, bestehend aus einem Rumpf(21) mit einer Klapper ohne Rücklauf (32), der mit der Turbine (10) eingebaut ist, welche die Welle in Betrieb setzt, bildet den Antriebsmotor, der unter dem Rotor (3) der Luftschraubenblätterhalterung (4) angehängt ist; diese Turbine (21) (10) bildet die Motorkraft des Apparates. Alle gegenwärtigen in Betrieb stehenden Hydrauliktransmissionen existieren nicht mehr, die Drehelemente werden von der hydraulischen Kraft (10) angetrieben, dieser Prozess wird manövrierfähiger durch diesen fortschreitenden Prozess;

3. Apparat gemäss des Anspruchs 2 charakterisiert sich durch die Turbine (10) in einem festen Rumpf (21), der an den Trichtern (48) befestigt ist, die die Welle (49) in Bewegung setzt, über der sich der Rotor (3) mit den Auftriebsluftschraubenblättern befindet; die Antriebswelle (49) durchdringt die Trichter (48); dazwischen befindet sich das Teil (6), an dem das männliche Teil (2A) befestigt ist, dessen Achse auf das Teil (2) auf dem Chassis aufgesetzt ist, am Trägeransatz (1); diese Verkämmung bewegt die Gesamtheit der Auftriebs des Rotorkopfes (3) des Apparates; diese Einheit bewegt sich unter der Tätigung des Ventils (9), das mit dem Arm des zyklischen Steigungsgewinde verbunden ist, das sich neben dem Piloten befuidet,

4. Apparat gemäß des Anspruchs 3 karakterisiert sich durch die Öffnung des Kollektiv-Steigungsgewinde, die durch die Welle (42) getätigt wird, die die Zentralantriebswelle (49) längstweise durchdringt und an der Rotornate (3) herauskommt, ein Trichter (50) führt diese Welle (42); der Wellenausgang (42) erhält an seinem Ende das Halterungsplateau (7) mit allen mit den Luftschraubenblättern verbundenen Nockenhebeln (7A); die Tätigung des mit dem Steuerknüppel mit Kollektiv-Steigungsgewinde verbundenen Mechanismus (8), der sich bei dem Piloten befindet, führt zur Öffnung des Kollektiv-Steigungsgewinde der zwei Rotoren (3) mit Anti-vibrier-Luftschraubenblättern (5); die vorderen und hinteren Rotorenköpfe,- der hintere liegt im Vergleich zu dem vorderen etwas höher-, sind miteinander verbunden, um den gleichen Neigungswinkel zu haben.

5. Apparat gemäß der Ansprüche 1 und 3 karakterisiert sich dadurch aus, daß sich die Gesamteinheit des hydraulischen Schubs und Motorisierung in der tiefliegenden Mitte des Cockpits befindet; der Pilot befindet sich abgesondert und schalldicht geschützt darüber, vor der Schaltafel und der elektrischen Steuerung sitzend; jeder der zwei Passagiersitze befinden sich an den Seiten des Pilots und sind schnell zu verlassen; die Motorisierung wird duch einen Verbrennungsmotor (12) oder gemäß des Apparates ausgeführt; ein kleiner Reaktor treibt mit Hilfe einer automatischen Kupplung eine Starkhochdruckpumpe mit Kreislauf(11) an; diese Pumpe pumpt zu einem Verteiler (15), dessen Startventile geschlossen sind und der immer unter Druck steht aufgrund des Anschlusses des Pumpenansatzes (11) an den Verteiler (15). Ich unterstreiche, daß die Aatriebsmotorkraft (15) verfügbar bleibt, was ermöglicht, sich um dem Apparat herum ohne jede Gefahr zu zeigen, was nicht der Fall bei einem Hubschrauber ist; für das Ablassen des Drucks in die Kreisläufe kommt es zum Öffnen des Ventils (45) durch elektrischen Kontakt und die Luftschrauben (14) werden in ihren Ursprungstandort in den Apparat eingefahren, der sich vor den Passagieren befindet, aber isoliert, da das Cockpit abgedichtet und gesichert ist,

6. Apparat gemäß der Ansprüche 3-4-5 karakterisiert sich dadurch, daß, für die Inbetriebnahme, sich die Ventilansätze (28) (44) (45) ab dem Verteiler befinden, die eine voreingestellte und progressive Förderleistung haben, d.h. einen Abgang (28) zu den zwei Rotoren mit Auftriebsluflschraubenblättern (3) mit Einstellschraube an jedem Abgang, die die Kopfumdrehungen (3) reguliert; einen Abgang mit dem Ventil (45) mit voreingestellter Förderleistung zu den zwei einziehbaren ummantelten Propellern (14) mit gekoppelter Förderleistung für die zwei Propeller (14), da sie zu zweit funktionieren; einen Abgang mit dem Ventil (44) mit progressiver und voreingestellter Förderleistung für die stromlinienförmigen stabilisierenden Schaufeln (13); alle diese Abgänge sind mit elektrischer Kontaktsteuerung, alle Steuerungen befinden sich auf der Schalttafel vor dem Piloten; alle Rückführungen der Kreisläufe sind individuell und werden auf einem Zentralverteiler (52) gesammelt, der auf der Pumpenabsaugung (11) angeschlossen ist; ein Ausdehnungsgefäß befindet sich hinter dem Pilotensitz und ein Klappventil (34) ohne Rücklauf mit Doppeleffekt auf dessen Rückseite im Falle eines beabsichtigten Ausfalles,

7. Apparat gemäß der Ansprüche 3-4-5-6 karakterisiert sich durch die einziehbaren ummantelten Propellern (14), deren mechanischer Antrieb entfernt und mit einem hydraulischen Antrieb (10) und seinem Körper (21) ersetzt wurde, deren Antriebsturbine sich am Wellenende befindet und die Vortriebschraube (14) fixiert; dieser Prozeß begünstigt jetzt, daß die Propeller (14) ihren hydraulischen Motor am Wellenende haben, was wiederum den Ablauf dieser einziehbaren Gesamteinheit (14) fördert; dieser Prozeß ermöglicht den Propellern (14), wenn sie aus ihrem inneren Standort ausgefahren sind, sich zwischen 0° und 180° um ihren Achsenhalter (43) zu drehen, der sich auf der Führung (43A) befindet; ein kleiner Reduktormotor bringt die Welle (43) zum Drehen, um die Propeller (14) in die Ablaufposihion zu bringen, die der Pilot entschieden hat.

8. Apparat gemäß der Ansprüche 6-7 karakterisiert sich durch die einziehbaxen Propellern (14) mit kollektiven oder getrennten Ausgängen Die Kontakte befinden sich auf dem Bürstenkopf auf der Höhe des Piloten; der Steuerknüppel ist auf einem Kugelgelenk auf dem Boden befestigt; er erhält die Steuerung der Klappen (18), die mit den Propellern (14) gekoppelt sein können; die ummantelten Propeller (14) sind zusätzlich und dirigieren wenn nötig den Apparat zum Boden; alle Kreislaufeinheiten werden durch eine elektrische Ventilation (22) gekühlt,

9. Apparat gemäß der Ansprüchen 4-5 charakterisiert sich dadurch, daß der Apparat zwei stromlinienförmigen Schaufeln (13) besitzt, die sich unter den Sitzen mit isoliertem Boden befinden und die Männer befinden sich auf den Sitzen. Der sich im Innern befindliche Ausgang der Männer ist ein schneller Ausgang. Die stromlinienförmigen Schaufeln (13) besitzen eine Mehrzahl an Schaufeln, die auf der Luftschraubennabe der Zentralhatterung befestigt und verstellbar sind; diese mobilen Schaufeln sind vom Verstellmechanismus bis zum System an das Steuerpedal angeschlossen, das sich auf dem Boden vor dem Piloten befindet; für die Rotation dieser Schaufeln (13), die durch die Turbine (10) erfolgt. Der Turbinenkörper (21) ist mit geschweißten Rohren an das Chassis befestigt; der Durchmesser der Turbine (10) paßt sich dem Durchmesser der Auftriebsschaufeln an, der nicht 0,60 mts übersteigt. Die Versorgungen (17) (20) werden über Schläuche, die an festen Rohren angeschlosen sind, ausgeführt,

10. Apparat gemäß der Ansprüche 6-8 karakterisiert sich dadurch, daß das Stabilitätsprinzip über die stromlinienförmigen Schaufeln (13) läuft, die verstellbar sind und die im Falle von Gleichgewichtsverlust der Stabilität, sei es durch das Gewicht der Männer auf einer oder der anderen Seite oder sei est aufgrund einer Fußberührung des Steuerpedals, rückt das Steuerpedal seitlich, um auszurichten und der Apparat kehrt in die normale horizontale Fluglinie zurück; dieser Fall kommt vor, wenn ein Mann auf die Erde herausspringt, aber in wenigen Sekunden ist alles wieder stabilisiert,

11. Apparat gemäß der Ansprüche 1-2-3 charakterisiert sich durch sein gesamtes Konzept. Es wird eine leichte Konstruktion sein, durch die Entfernung des gesamten Mechanikkastens und der schweren und sperrigen Kardanen; durch diese Erfindung mit Ausarbeitung des Hydraulikantriebs ist eine Weiterentwicklung im Bereich der drehenden Tragwerke; dieser Apparat kann den Angriffskommandos, der Technik dienen, da die Transportierfähigkeit per Lastwagen an den Einsatzort zu enormen Einsparungen beiträgt; er benötigt wenig Wartung, er wird leicht zu steuern sein, die Geschwindigkeit wird ungefähr 100 km pro Stunde sein.

12. Der Apparat gemäß der vorhergehenden Ansprüchen charakterisiert sich dadurch, daß das Hydraulikantriebssystem und die Prozesse beschreiben daß, unter Tätigung der Pumpe und nach Zuschluß der Startventilen, der Motor einige Sekunden später zum Start bereit ist aufgrund der in Bereitschaft stehenden Motorreserve (15), der Montage dieses Systems auf gegenwärtige Hubschraubermodelle möglich ist.

13. Der Apparat gemäß der vorhergehenden Ansprüche charakterisiert sich dadurch, daß der Apparat sein Sicherheitssystem besitzt (kann wenn nötig montiert werden); im Falle einer Panne des Antriebsmotors ist ein Sicherheitssystem auf den Apparat installiert (Hydropal aérien); der Antriebsanschluß wird durch eine automatische Kupplung (47) ausgeübt, die auf der Seite der Hydraulikpumpe auf seiner Welle die Luftantriebsturbine hat; diese Turbine ist mit der Luftreserve über Kanalisationen mit dem Kompressor (46) verbunden; im Falle eines Motorausfalls (12) setzt der Pilot die Luftturbine in Betrieb, die die Hydraulikpumpe in Bewegung setzt, was dem Apparat ermöglicht zu landen.

## Claims

1. The said flying machine called " Hydropal terrestre et aérien HP02 " with hydraulic drive propelled by two composed separated forces, of an engine and a very high pressure pump, the pump (11) being the available force for operation of the different lifts and propulsions; a machine whose structure comprising in its centre a cockpit composed of ducal or other tubes, rectangular in shape holding three persons including the pilot in the centre above the mechanics, engine, which are set lower, the two other passengers on each side for rapid exit, in the centre on the central axle of the chassis are fixed, welded, triangular girders, one in front, one behind, these are equipped with strengtliening crosspieces; at each end of the triangular girders, supports (2A) of each rotor are fixed which hold the rotor assembly, hydraulic turbines and vertical shaft (49), a rotor head is placed on each extremity; the machine having two lift rotors eqipped at each end with a shaft, the rotor (3) being equipped with a multiplicity of four blades (4) of variable pitch, these blades (4) are of triangular lift, more stable, wider towards the pivoting connection, with at the end of the blades (4) an end of blade detachable wing tip with a downward 50° curve which avoids the air gushing outwards; four air passages set at flat ejection (5) are housed in the ends of the lift blades (4) mailing a neutral space of the upper part of the lift of the blade (4) and the jet (5) which avoids this vibration for the rotor blade assembly;

2. Flying machine in accordance with characterisitcs described in claim 1 : an hydraulic drive system (21) (10) is planned; this drive comprises a body (21) with non-return flap (32) integrated in the turbine (10) which drives the shaft (49) and comprises the drive engine which is suspended under blade support (4) rotor (3), this turbine (21) (10) forming the driving force of the machine; all hydraulic transmissions presently in service no longer exist, that the rotary elements are driven by hydraulic force (10), that this process becomes more manoeuvrable, by this progressive process;

3. Flying machine in accordance with the characteristics described in claim 2 in that that the turbine (10) in its fixed body is fixed to cones (48) drives the shaft (49) surmounted by the rotor (3) with lift blades (4); the drive shaft (49) crosses the cones (48); between the two the part (6) is situated where the male part (2A) is fixed, the said axle fits into the part (2) placed on the chassis, end of girder (1); this interlocking causes the whole of the lift rotor head (3) of the flying machine to articulate, the assembly tilts through the action of the jack (9) connected to the cyclic pitch stick located next to the pilot;

4. Flying machine in accordance with characteristics described in claim 3 to the effect that the opening of the collective pitch is operated by the shaft (42) crossing the central drive shaft (49) along its length to come out above the rotor boss (3) a cone (50) guides this shaft (42); the outlet of the shaft (42) at its end takes the support plate (7) with all the connecting rods (7A) connected to the blades (4); activated by the mechanism (8) connected to the collective pitch stick, which is located near the pilot, makes the opening of the collective pitch of both the two rotors (3) with anti-vibrating blades (5) ; the front and rear rotor heads, the latter being higher up in relation to the front rotor; both being connected together in order to have the same angle of inclination;

5. Flying machine in accordance with characteristics described in claims 1 and 3 to the effect that the whole assembly, hydraulic thrust and motorisation being situated in the lowered centre of the cockpit ; the pilot is above where it is insulated and soundproofed, sitting in front of the instrument panel and electrical controls; the two passenger seats being on each side of the pilot and can be rapidly cleared; motorisation is carried out by internal combustion engine (12) or depending on the machine, a small jet which drives a very high pressure recycling pump (11) by means of automatic clutch; this pump reverses onto a manifold (15) whose outlet valves are closed, this distributor manifold which is always under pressure following connection to the pump outlet (11) to the manifold (15) ; I specify that the driving force (15) remains available, thus permitting to move around the machine with no danger which is not the case with a helicopter; for the deflation of the pressure in the circuits, open the valve (45) by electric contact, the blades (14) being returned to their place in the machine which is located in front of the passengers, but insulated, the cockpit being airtight, thus in total safety

6. Flying machine in accordance with characteristics described in claims 3 - 4 - 5, to the effect that regarding the operation from the manifold situated on the valve outlets (28) (44) (45) which are pre-adjusted and progressive rate, that is to say, an outlet (28) towards two rotors with lift blades (3) with adjusting screws on each outlet which regulate the revolutions of the heads (3), an outlet with the valve (45) pre-adjusted output rate towards two retractable faired propellers (14) twin-rate for the two propellers (14) as these operate in twos ; an outlet with progressive and pre-set rate valve (44) for the stabilising faired turbine blades (13), all these outlets are by electric contact control, all the controls are placed on the instrument panel in front of the pilot ; all the circuit returns are individual, are collected on a central manifold (52), which itself is connected onto the pump suction (11), a surge tank is placed behind the pilot's seat, a double action check valve (34) is placed on return (20) of this, in the case of voluntary non functioning;

7. Flying machine as described in the characterisitcs of claims 3-4-5-6, that by means of the retractable faired propellers (14) which were mechanical drive is removed to be replaced by a hydraulic drive (10) and its body (21) whose drive turbine is placed at the end of the shaft, fixing the propelling propellers (14), this process now favours the fact that the propellers (14) having their hydraulic motor at the end of the shaft favours the evolution of this retractable assembly (14) ; this process enables the propellers (14) once out of their internal housing to revolve from 0° to 180° on their axle support (43) the said is placed on a guide (43A), with the thrust of the jack (51) a small reducing motor causes the shaft to turn (43) to position the propellers (14) in the revolving position estimated by the pilot;

8. Flying machine in accordance with the characteristics described in claims 6 - 7, for which the retractable propellers (14) are put out jointly or separately; the contacts are located on the joystick at the level of the pilot, the joystick is fixed to the floor on a ball and socket joint which takes control of the flaps (18) and can be combined with the propellers (14), the faired propellers (14) are complementary if necessary, directing the machine towards the ground, the entirety of the circuits are cooled by means of an electric ventilation (22)

9. Flying machine in accordance with characteristics described in claims 4 - 5 to the effect that the flying machine, possesses two fined turbine blades (13) which are placed under the seats in the insulated floor, the men to be set down are seated on the seats ; the exit of the men inside are by rapid exit, these faired turbine blades (13) have a multiplicity of blades fixed to the central support boss and are variable pitch, these mobile blades are connected from the pitch variation mechanism to the system on the rudder bar situated on the floor in front of the pilot, for the rotation of the turbine blades (13), this is done by turbine (10) and turbine body (21) is fixed to the chassis by welded tubes, the turbine (10) is appropriate in diameter according to the diameter of the Lift blades not exceeding 0.60 metres, the supplies (17) (20) are carried out by flexible tubes connected to fixed tubes;

10. Flying machine in accordance with characteristics described in claims 6 - 8 to the effect that the principle for stability passes by the faired turbine blades (13) which are variable pitch, which in the case of the stability being off balance, either by the weight of the men on the one hand or, on the other hand, that the machine has a tendency to lean following the foot hitting the rudder bar, it pushes on the side to be rectified and the machine rights itself horizontally in the line of flight ; this case will tend to happen when the men jump to land on the ground, but everything stabilises in a few seconds;

11. Flying machine in accordance with characteristics described in claims 1 - 2 - 4 to the effect that in the entirety of its design will be a lightweight construction, made lighter by removal of all box mechanics, heavy and awkward universal joints, by this invention adjusted hydraulic drive is an evolution in the field of rotary wings, this machine will be able to be used by attack commandos, the Engineers, as it can be transported by lorry to the field of operations which contributes to an enormous economy, it will involve little maintenance, it will be simple to pilot, the speed will be of approximately 100 kms an hour;

12. Flying machine in accordance with characteristics described in the preceding claims, **characterised in that** the hydraulic drive system and processes describe that the engine, with the pump operating, the valves of the outlets closed and ready to lift off in the seconds that follow by the reserve (15) engine on stand by, thus ensuring security for the persons around, installing this system on current models of helicopters represents a possibility;

13. Flying machine as described in preceding claims **characterised that** the machine possesses its security system ( can be mounted if necessary); in case of drive motor break down, a safety and emergency system is installled on the machine (Hydropal air), the drive connection being carried out by automatic clutch (47) whose drive air turbine is on its shaft on the hydraulic pump side, this turbine is linked to the air reserve by pipes with the compressor (46), which in the case of the engine stopping (12) the pilot engages the air turbine which runs the hydraulic pump and enables the machine to land;
